# EUROPEAN PATENT APPLICATION

(11) **EP 4 841 067 A1**
(43) Date of publication of application: **18.11.2026**
(21) Application number: 26176011.0
(22) Date of filing: 30.04.2026
(51) Int. Cl.: F01D 5/28, C04B 35/117

(54) **A CERAMIC-CONTAINING MATERIAL AND METHOD COMPRISING A CAVITY WITH TURBULENCE INDUCING FEATURES**

(30) Priority: 01.05.2025 US 202519196171
(71) Applicant: RTX Corporation, Farmington, CT 06032 (US)
(72) Inventor: ABDI, Ahmed Abdillahi, San Diego, 92115 (US); GLADDING, Cale, Vista, 92083 (US); McDANIELS, Kevin, San Clemente, 92673 (US)
(74) Representative: Dehns

(57) **Abstract**

A ceramic-containing material (300), comprising one or more plies (310) arranged in a structure having at least one internal cavity (320) therein, at least one ply within the at least one internal cavity having at least one turbulence inducing feature (330), the at least one turbulence inducing feature comprises at least one fiber protruding from the surface of the at least one internal cavity.

## Description

### FIELD OF THE INVENTION

The subject matter disclosed herein relates to ceramic-containing materials and, in particular, to a method for modifying a ceramic-containing material.

### BACKGROUND OF THE INVENTION

Ceramic matrix composites (CMC) are capable of operating within and withstanding high operating temperatures. For at least this reason, CMCs are attractive as a material when fabricating gas turbine engine components. In addition, CMCs are also a laminated structure containing many plies, i.e., layers of woven fiber, that are bonded together with interface coatings and a matrix material. During use in a gas turbine engine, the hot gases of a gas path within the engine raise the temperature of the exposed surfaces of a gas turbine engine component. In contrast, those surface of the gas turbine engine component that are outboard of the gas path are much cooler in temperature. As a result, a large thermal gradient is observed, especially during transient conditions of the gas turbine engine operating envelope. These observed thermal gradients can cause stresses that negatively impact the durability of a gas turbine engine component for use in either commercial or military applications.

Gas turbine engine designs require ensuring low thermal gradients are maintained. Low thermal gradients may be maintained by moving by-pass air, e.g., air outside of the gas turbine engine core, to pull heat from those surfaces exposed to the gas path, then passing through the gas turbine engine component, and eventually radially outboard as quickly and efficiently as possible. When using by-pass air to transfer heat as described, turbulent by-pass air is desirable. For example, when compared to, e.g., laminar flow, turbulent by-pass air mixes and absorbs more heat prior to moving away from the gas turbine engine component.

Consequently, there exists a need for ceramic-containing material based gas turbine engine components, and method(s) of fabrication, capable of generating turbulent air flow to more effectively facilitate heat transfer during operation in a gas turbine engine environment.

### SUMMARY OF THE INVENTION

The present disclosure is directed, in a first aspect, to a ceramic-containing material, comprising one or more plies arranged in a structure having at least one internal cavity therein, at least one ply within the at least one internal cavity having at least one turbulence inducing feature, the at least one turbulence inducing feature comprises at least one fiber protruding from the surface of the at least one internal cavity.

In further embodiments of the present disclosure, including further embodiments of the above exemplary embodiments, the ceramic-containing material comprises a preform.

In further embodiments of the present disclosure, including further embodiments of the above exemplary embodiments, the formation comprises a stack.

In further embodiments of the present disclosure, including further embodiments of the above exemplary embodiments, the at least one turbulence inducing feature covers a surface area of the at least one internal cavity.

In further embodiments of the present disclosure, including further embodiments of the above exemplary embodiments, the at least one turbulence inducing feature covers up to approximately 95% of a surface area of the at least one internal cavity.

In further embodiments of the present disclosure, including further embodiments of the above exemplary embodiments, the at least one turbulence inducing feature covers approximately 15% to 20% of a surface area of the at least one internal cavity.

In another embodiment, the present disclosure is directed to a ceramic-containing material fabricated according to the following steps: providing one or more fiber tows; fabricating one or more plies using the fiber tows; fabricating one or more turbulence inducing features on the surface of at least one ply; and arranging the plies to form the ceramic-containing material comprising one or more plies arranged in a formation having at least one internal cavity therein, at least one ply within the at least one internal cavity having at least one turbulence inducing feature, the turbulence inducing feature comprises at least one fiber protruding from the surface of the at least one internal cavity.

In yet another embodiment, the present disclosure is directed to a method for fabricating internal turbulence inducing features within a ceramic-containing material, comprising: providing one or more fiber tows; fabricating one or more plies using the fiber tows; fabricating one or more turbulence inducing features on the surface of at least one ply without using a support structure; and arranging the plies into a structure having at least one internal cavity, the at least one ply having the turbulence inducing features disposed within the at least one internal cavity.

In further embodiments of the present disclosure, including further embodiments of the above exemplary embodiments, fabricating one or more turbulence inducing features further comprises using an apparatus capable of producing a source of photonic energy having an energy density sufficient to rupture at least one fiber of the one or more fiber tows or the one or more plies or both.

In further embodiments of the present disclosure, including further embodiments of the above exemplary embodiments, fabricating one or more turbulence inducing features further comprises rupturing to a depth of approximately 10% to approximately 30% from the surface of the at least one ply.

In further embodiments of the present disclosure, including further embodiments of the above exemplary embodiments, fabricating one or more turbulence inducing features comprises: laser etching, laser engraving, and combinations thereof.

In further embodiments of the present disclosure, including further embodiments of the above exemplary embodiments, the turbulence inducing features comprise at least one fiber protruding from the surface of at least one ply.

In further embodiments of the present disclosure, including further embodiments of the above exemplary embodiments, the at least one turbulence inducing feature covers a surface area of the at least one internal cavity.

In further embodiments of the present disclosure, including further embodiments of the above exemplary embodiments, the at least one turbulence inducing feature covers up to approximately 95% of a surface area of the at least one internal cavity.

In further embodiments of the present disclosure, including further embodiments of the above exemplary embodiments, the at least one turbulence inducing feature covers approximately 15% to 20% of a surface area of the at least one internal cavity.

In still yet another embodiment, the present disclosure is directed to a method for fabricating internal turbulence inducing features within a ceramic-containing material, comprising: providing one or more fiber tows; fabricating one or more plies using the fiber tows; arranging the plies into a partial structure; fabricating one or more turbulence inducing features on the surface of at least one ply of the partial structure without using a support structure; and arranging the piles into a completed structure, the at least one ply having the turbulence inducing features disposed within an internal cavity of the structure.

In further embodiments of the present disclosure, including further embodiments of the above exemplary embodiments, fabricating one or more turbulence inducing features further comprises using an apparatus capable of producing a source of photonic energy having an energy density sufficient to rupture at least one fiber of the one or more fiber tows or the one or more plies or both.

In further embodiments of the present disclosure, including further embodiments of the above exemplary embodiments, fabricating one or more turbulence inducing features further comprises rupturing to a depth of approximately 10% to approximately 30% from the surface of the at least one ply.

In further embodiments of the present disclosure, including further embodiments of the above exemplary embodiments, the at least one turbulence inducing feature covers up to approximately 95% of a surface area of the at least one internal cavity.

In further embodiments of the present disclosure, including further embodiments of the above exemplary embodiments, the at least one turbulence inducing feature covers approximately 15% to 20% of a surface area of the at least one internal cavity.

In further embodiments of the present disclosure, including further embodiments of the above exemplary embodiments, fabricating one or more turbulence inducing features comprises: laser etching, laser engraving, and combinations thereof.

In further embodiments of the present disclosure, including further embodiments of the above exemplary embodiments, the turbulence inducing features comprise at least one fiber protruding from the surface of at least one ply.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 illustrates a flowchart setting forth an exemplary method for modifying the surfaces of a ceramic-containing material.
FIG. 2, not drawn to scale, illustrates a cross-sectional view of a ceramic-containing material possessing an internal cavity.
FIG. 3, not drawn to scale, illustrates a cross-sectional view of an exemplary ceramic-containing material possessing an internal cavity containing surface-modified structural features.
FIG. 4, not drawn to scale, illustrates a cross-sectional view of another exemplary ceramic-containing material possessing an internal cavity containing surface-modified structural features.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

The present disclosure is directed to an exemplary method for fabricating internal turbulence inducing features within a ceramic-containing material. The internal turbulence inducing features may be fabricated accurately and repeatably using a machine. Such an approach renders obsolete a hand lay-up process that, in comparison, is not repeatable and requires additional tooling. For example, a CMC manufacturing process can involve stacking woven fiber plies on top of each other, pressed into a mold having a desired shape, and achieving a final preforming geometry. External features may be supported and fabricated using a mold and/or tool of the same geometry and/or shape. The tool may then be removed once an interface coating is applied. The resultant part can then maintain its shape without support. Fabricating internal cavities, however, may present unique challenge(s). Firstly, because of their size, stacking thin and short plies on top of each other and in the correct location may be difficult. During this time, the ceramic preform may be supported to ensure the shape is maintained at elevated temperatures. Otherwise, the plies will move or slide from their original position. Secondly, a negative of a structure may be required to hold the internal cavity geometries in place for an eventual interface coating. But afterwards the negative of the structure will be trapped inside. A suitable material would have to be found that could be removed afterwards by thermal or a chemical process. The exemplary method disclosed herein avoids such a fabrication complication.

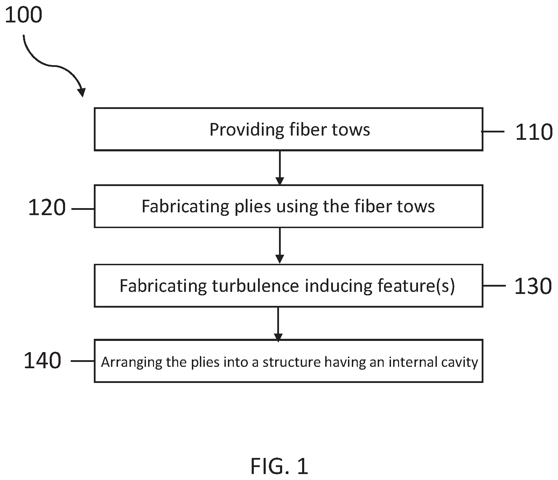

Referring now to FIG. 1, a flowchart 100 illustrates an embodiment of an exemplary method for fabricating internal turbulence inducing features within a ceramic-containing material. A ceramic-containing material may include, but is not limited to, a ceramic fiber preform, a coated preform, a partially densified CMC, a CMC, as well as any one of the aforementioned containing a metal, a metal alloy, a metalloid, a metalloid alloy; individually, and combinations thereof. At an exemplary step 110 of FIG. 1, one or more fiber tows containing one or more fibers may be provided. Suitable fibers for use as the fibers and/or fiber tows may include, but are not limited to, silicon carbide, carbon, aluminum oxide, silicon nitride, combinations thereof, and the like. Next, at an exemplary step 120 of FIG. 1, one or more plies may be fabricated using the one or more fiber tows. The fiber tows may be assembled, bundled, and the like, together to form a single ply.

At an exemplary step 130 of FIG. 1, at least one ply may be etched so that one or more individual fibers of one or more individual fiber tows may rupture. The ruptured fiber(s) may protrude outwardly from the ply's or plies' exterior surface(s). Utilizing the proper power settings, the ruptured fibers may be limited to the surface, that is, a minimal depth of penetration of the ply or plies may be achieved. In turn, the ply's overall shape and structural integrity may be maintained and not sacrificed using the etching technique. Suitable etching techniques may be performed by an apparatus capable of producing a source of photonic energy having sufficient energy density to rupture at least one fiber of a tow and/or ply. In at least one embodiment, the apparatus may include, but is not limited to, a dry laser, and combinations thereof. The apparatus may be operated at a power range of up to approximately 25 W, and, in particular, approximately 21 W to approximately 24 W; a wavelength range of approximately 532 nm to approximately 1064 nm; a pulse frequency range of up to approximately 400 KHz; and, a traverse speed range of up to approximately 12,000 mm/s. When operating such an apparatus to rupture fibers as discussed above, the apparatus may be operated at a power range of approximately 85% to 95% of the maximum power output achievable. At that power output range, the emitted pulsed photonic energy may rupture the fiber(s) up to a depth of approximately 10% to approximately 30% as measured from the surface of the tow and/or ply. Once etched, the protruding fibers may form a series of obstructions. For example, during use, incoming air may contact the protruding fiber(s) and become turbulent, e.g., mixing, tumbling, and the like. The resultant turbulent air flow facilitates heat transfer, and reduces a thermal gradient experienced by the ceramic matrix composite. To achieve such turbulent air flow, the protruding fibers may exhibit and possess individual shape(s), e.g., geometrical, and dimension(s), e.g., length, width and height, compatible with and conformable to the shape and dimensions of the internal cavity.

At an exemplary step 140 of FIG. 1, those plies having the protruding fibers, including additional plies, may be assembled to form a structure containing an internal cavity. In at least one embodiment, those plies having protruding fibers, that is, the turbulence inducing features, may be incorporated as the surface, e.g., at least a portion and up to its entirety, of the internal cavity. The turbulence inducing features may be most effective when the features are disposed on the face(s) of the gas turbine engine component just outboard of the gas path, and enclosed by additional layers, to form the internal cavity. The geometry or pattern of the turbulence inducing features may be a series of obstructions in the path of the air, preventing the air from moving in a straight line, causing the air to go over, tumble and mix. The size, shape, and/or dimensions of the turbulence inducing features may exhibit, e.g., a speed bump, raised surface, and the like, of certain width, length, and height within the cavity, chamber, and/or labyrinth. When applied across the entire cavity, chamber, and/or labyrinth, prior to placing the cover ply, an entire series of turbulence inducing geometries may be fabricated. In at least one embodiment, the resultant ceramic preform may contain fibers still supported by the tows, and the fibers beneath in the same ply, and so an internal supporting structure, to form the cavity, may not be required. In at least one other embodiment, when the ceramic preform incorporates a top ply, to which the turbulence inducing features may be applied to, as a sacrificial ply, the structural integrity of the resultant gas turbine engine component may not be impacted. The top ply may only serve to support the turbulence inducing features, rather than provide structural support to the cavity and/or completed structure.

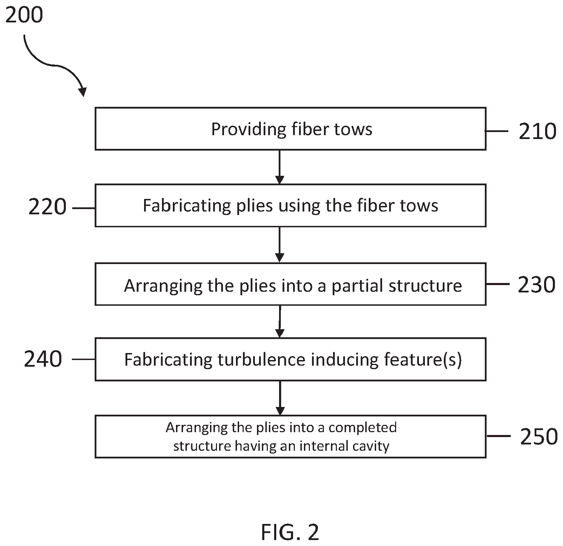

Referring now to FIG. 2, in at least one other embodiment, a flowchart 200 illustrates another exemplary method for fabricating internal turbulence inducing features within a ceramic-containing material. When dealing with a process of laying up the CMC layer by layer, the internal cavity, chamber and/or labyrinth that will include the turbulence inducing features, may be layered at the time of preforming. At a step 210 of FIG. 2, one or more fiber tows containing one or more fibers may be provided as described above. Next, at an exemplary step 220 of FIG. 2, one or more plies may be fabricated using the one or more fiber tows as described above. Again, the fiber tows may be assembled, bundled, and the like, together to form a single ply. Next, at a step 230 of FIG. 2, the plies may be arranged and assembled into a partial structure that may lead to the eventual, desired ceramic preform structure.

Next, at a step 240, at least one ply of the partial structure may be etched so that one or more individual fibers of one or more individual fiber tows of the ply may rupture. The ruptured fiber(s) may protrude outwardly from the ply's or plies' exterior surface(s). Utilizing the proper power settings, the ruptured fibers may be limited to the surface, that is, a minimal depth of penetration of the ply or plies may be achieved. In turn, the ply's overall shape and structural integrity may be maintained and not sacrificed using the etching technique discussed above. Once etched, the protruding fibers may form a series of obstructions. For example, during use, incoming air may contact the protruding fiber(s) and become turbulent, e.g., mixing, tumbling, and the like. The resultant turbulent air flow facilitates heat transfer, and reduces a thermal gradient experienced by the ceramic matrix composite. To achieve such turbulent flow, the protruding fibers may exhibit and possess individual shape(s), e.g., geometrical, and dimension(s), e.g., length, width and height, compatible with and conformable to the shape and dimensions of the internal cavity, chamber, and/or labyrinth of the completed structure, being fabricated.

Next, at a step 250 of FIG. 2, those plies of the partial structure having the protruding fibers, including additional plies, may be assembled to form a complete structure containing an internal cavity, chamber and/or labyrinth. The size of the internal cavity, chamber and/or labyrinth, as well as the number of cavities, chambers and/or labyrinths, may be scaled relative to the size of the gas turbine engine component being fabricated. Larger gas turbine engine components may utilize more than one cavity to accommodate a larger volume of air flow through the component. In contrast, a smaller gas turbine component may utilize fewer internal cavity or even one internal cavity to accommodate a smaller volume of air flow therethrough. The internal cavity, chamber and/or labyrinth may be located proximate to the gas path surface of the component for optimal heat transfer. At the same time, the thickness of the structure between the gas path surface and internal cavity may be sufficient to withstand the gas path temperature(s). In at least one embodiment, those plies having protruding fibers, that is, the turbulence inducing features, may be incorporated as the interior surface, e.g., at least a portion and up to its entirety, of the internal cavity being fabricated. The turbulence inducing features may be most effective when the features are disposed on the face(s) of the gas turbine engine component just outboard of the gas path, and enclosed by additional layers, to form the internal cavity. The geometry or pattern of the turbulence inducing features may be a series of obstructions in the path of the air, preventing the air from moving in a straight line, thus instead causing the air to slow down, go over, tumble and mix. The size, shape, and/or dimensions of the turbulence inducing features may exhibit, e.g., a speed bump, raised surface, and the like, of certain width, length, and height within the cavity, chamber, and/or labyrinth. The width, length, height and amount of turbulence inducing features may not be so large and/or numerous so as to bottleneck, block or prevent the air from moving through the internal cavity. When applied across the entire cavity, chamber, and/or labyrinth, prior to placing the cover ply, an entire series of turbulence inducing geometries within the completed structure may be fabricated. In at least one embodiment, the resultant completed structure may contain fibers still supported by the tows, and the fibers beneath in the same ply, and so an internal supporting structure, to form the cavity, still may not be required as discussed above. In at least one other embodiment, when the completed structure of the desired ceramic preform incorporates a top ply, to which the turbulence inducing features may be applied to, as a sacrificial ply, the structural integrity of the resultant gas turbine engine component may not be impacted. The completed structure of plies, including the plies having the turbulence inducing features, may be coated with a binder, e.g., a binder solution, to retain the plies together during the layup process. Suitable binder materials may include, but are not limited to, polyvinyl alcohol, polyvinyl butyral, polyvinylpyrrolidone, polyethylenimine, cellulosic binders, phenolic resins, acrylics; individually, and combinations thereof. Later, during rigidization, the binder material(s) may be removed, e.g., burned out, thus resulting in the coated preform.

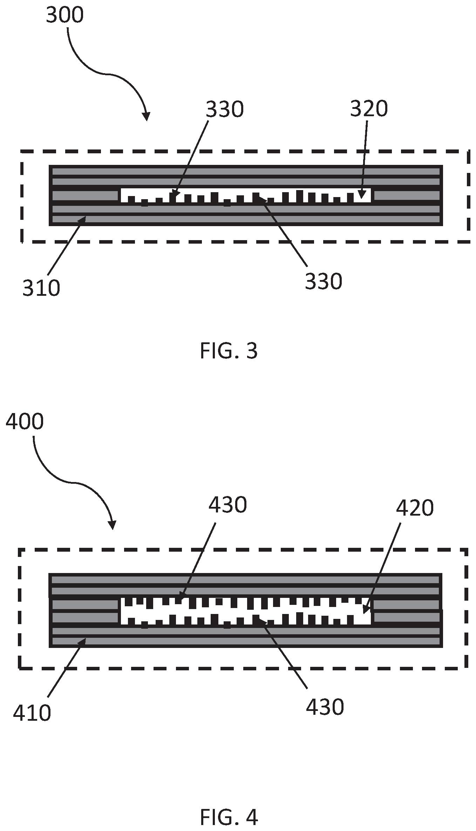

Referring now to FIGS. 3 and 4, an exemplary ceramic-containing material 300, 400, e.g., a ceramic preform, fabricated according to the exemplary methods disclosed herein is shown. As disclosed above, the ceramic-containing material 300, 400 may comprise at least one ply 310, 410 assembled to form a complete structure containing an internal cavity 320, 420 having the turbulence inducing features 330, 430 disposed therein. As disclosed herein, the turbulence inducing features 330, 430 may comprise at least one fiber protruding from at least one ply 310, 410 that constitutes the surface of the internal cavity 320, 420. As discussed earlier, the turbulence inducing features 330, 430 may be present over the entire surface area of the internal cavity 320. 420. In at least one embodiment, the turbulence inducing features 330, 430 may be present up to approximately 95% of the entire surface area of the internal cavity 320, 420. In at least one other embodiment, the turbulence inducing features 330, 430 may be present from approximately 15% to approximately 20% of the entire surface area of the internal cavity 320, 420. For example, in FIG. 3, the turbulence inducing features 330 may be present on the floor of the internal cavity 320. In contrast, in FIG. 4, the turbulence inducing features 430 may be present on the floor and ceiling of the internal cavity 420. Once the ceramic preform is fabricated, an interface coating may be deposited on the resultant ceramic preform to rigidize the preform and fabricate a coated preform as defined above. Afterwards, one or more densification layers may be deposited onto the coated preform to form a partially densified ceramic matrix composite until all coatings and matrix are deposited and a ceramic matrix composite is formed.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A ceramic-containing material (300; 400), comprising one or more plies (310; 410) arranged in a structure having at least one internal cavity (320; 420) therein, at least one ply within the at least one internal cavity having at least one turbulence inducing feature (330; 430), the at least one turbulence inducing feature comprises at least one fiber protruding from the surface of the at least one internal cavity.

2. The ceramic-containing material of claim 1, wherein the ceramic-containing material comprises a preform.

3. The ceramic-containing material of claim 1 or 2, wherein the formation comprises a stack.

4. The ceramic-containing material of claim 1, 2 or 3, wherein the at least one turbulence inducing feature covers a surface area of the at least one internal cavity.

5. The ceramic-containing material of claim 1, 2 or 3, wherein the at least one turbulence inducing feature covers up to approximately 95% of a surface area of the at least one internal cavity.

6. The ceramic-containing material of claim 1, 2 or 3, wherein the at least one turbulence inducing feature covers approximately 15% to 20% of a surface area of the at least one internal cavity.

7. A ceramic-containing material (300; 400) fabricated according to the following steps:
providing one or more fiber tows;
fabricating one or more plies (310; 410) using the fiber tows;
fabricating one or more turbulence inducing features (330; 430) on the surface of at least one ply; and
arranging the plies to form the ceramic-containing material comprising one or more plies arranged in a formation having at least one internal cavity (320; 420) therein, at least one ply within the at least one internal cavity having at least one turbulence inducing feature, the turbulence inducing feature comprises at least one fiber protruding from the surface of the at least one internal cavity.

8. A method for fabricating internal turbulence inducing features (330; 430) within a ceramic-containing material (300; 400), comprising:
providing one or more fiber tows;
fabricating one or more plies (310; 410) using the fiber tows;
fabricating one or more turbulence inducing features (330; 430) on the surface of at least one ply without using a support structure; and
arranging the plies into a structure having at least one internal cavity (320; 420), the at least one ply having the turbulence inducing features disposed within the at least one internal cavity.

9. A method for fabricating internal turbulence inducing features (330; 430) within a ceramic-containing material (300; 400), comprising:
providing one or more fiber tows;
fabricating one or more plies (310; 410) using the fiber tows;
arranging the plies into a partial structure;
fabricating one or more turbulence inducing features (330; 430) on the surface of at least one ply of the partial structure without using a support structure; and
arranging the piles into a completed structure, the at least one ply having the turbulence inducing features disposed within an internal cavity (320; 420) of the structure.

10. The method of claim 8 or 9, wherein fabricating one or more turbulence inducing features further comprises using an apparatus capable of producing a source of photonic energy having an energy density sufficient to rupture at least one fiber of the one or more fiber tows or the one or more plies or both.

11. The method of claim 8, 9 or 10, wherein fabricating one or more turbulence inducing features further comprises rupturing to a depth of approximately 10% to approximately 30% from the surface of the at least one ply.

12. The method of any of claims 8 to 11, wherein fabricating one or more turbulence inducing features comprises: laser etching, laser engraving, and combinations thereof.

13. The method of any of claims 8 to 12, wherein the turbulence inducing features comprise at least one fiber protruding from the surface of at least one ply.

14. The method of any of claims 8 to 13, wherein the at least one turbulence inducing feature covers a surface area of the at least one internal cavity.

15. The method of any of claims 8 to 13, wherein:
the at least one turbulence inducing feature covers up to approximately 95% of a surface area of the at least one internal cavity; or
the at least one turbulence inducing feature covers approximately 15% to 20% of a surface area of the at least one internal cavity.
